# Europäisches Patentamt
## European Patent Office
## Office européen des brevets

(11) Numéro de publication: **0 165 132**
**B1**

(12) **FASCICULE DE BREVET EUROPÉEN**

(51) Int. Cl.⁴: **G 06 F 1/00**

(45) Date de publication du fascicule du brevet:
**14.12.88**

(21) Numéro de dépôt: **85400945.3**

(22) Date de dépôt: **14.05.85**

(54) Agencement de raccordement de clavier pour terminal informatique, notamment de télécommunication.

(30) Priorité: **15.05.84 FR 8407517**

(43) Date de publication de la demande:
**18.12.85 Bulletin 85/51**

(45) Mention de la délivrance du brevet:
**14.12.88 Bulletin 88/50**

(84) Etats contractants désignés:
**DE FR GB**

(56) Documents cité:
**EP-A-0 013 318**
**FR-A-2 501 953**
**FR-A-2 510 782**

**CHIP ZEITSCHRIFT FÜR MIKROCOMPUTER-TECHNIK, no. 10, octobre 1983, pages 72-74, Würzburg, DE; "Form der Zukunft"**

(73) Titulaire: **TELIC ALCATEL, 12, rue de la Baume, F-75008 Paris (FR)**

(72) Inventeur: **Moraine, Michel, 3 rue des Jardins, F-67530 Boersch (FR)**

(74) Mandataire: **Weinmiller, Jürgen, Lennéstrasse 9 Postfach 24, D-8133 Feldafing (DE)**

LIBER, STOCKHOLM 1988

## Description

La présente invention a pour objet un agencement de raccordement de clavier pour terminal informatique, notamment de télécommunication du type dit terminal d'annuaire permettant d'accéder à des bases de données par l'intermédiaire du réseau téléphonique tel que décrit dans le préambule de la revendication 1. Un tel agencement est connu du document FR-A-2 501 953.

De manière connue les terminaux informatiques à écran sont destinés à produire ou recevoir des informations transmissibles sous forme numérique et affichables sur écran à partir de signal transitant via une liaison de transmission ou produits à partir d'un clavier associée.

De manière connue les terminaux informatiques de télécommunication sont prévus pour pouvoir se connecter au réseau téléphonique. Ils permettent donc de recevoir et d'afficher des informations fournies sous forme codée par l'intermédiaire de la ligne téléphonique ou à partir du clavier qui leur est associé.

En ce but, ces terminaux comportent un équipement téléphonique apte à assurer seul ou en association avec un poste téléphonique, les fonctions d'appel et de commutation normalement assurées par un poste; de plus un modem associé à cet équipement permet la conversion des signal reçus de la ligne en code de transmission de manière à ce qu'ils puissent être exploités et affichés sur un écran prévu sur le terminal et pour permettre la conversion en code de transmission des caractères alphanumériques ou des codes de fonction fournis par l'intermédiaire du clavier, via un équipement d'interface.

Actuellement l'affichage s'effectue par l'intermédiaire d'un dispositif de visualisation à tube écran classique doté d'un équipement d'alimentation et de commande placé sous le contrôle d'une logique à microprocesseur qui assure le pilotage des différents équipements contenus dans le terminal.

De manière habituelle, chaque terminal est associé à un clavier, qui est soit positionné de manière file sur la carrosserie du terminal, soit repliable devant l'écran comme cela est le cas pour le terminal objet du document cité ci-dessus, soit encore indépendant du boîtier.

Cette dernière solution ne permet pas une protection de l'écran lorsque le terminal n'est pas utilisé, comme cela est possible avec le modèle objet du document ci-dessus, par contre elle permet des possibilités de mise en oeuvre de claviers très différents adaptés à des besoins spécifiques et en particulier de claviers montés dans des boîtiers dont les dimensions, les formes et les agencements de touches peuvent être très variés.

Ces possibilités ne sont, bien entendu, pas offertes par les terminaux à claviers fixes ou rabattables qui exigent des modifications, de carrosserie pour les uns, du coffret contenant le clavier pour les autres, qui ne sont pas nécessairement compatibles avec une production en série.

Le document FR-A-2 510 782 décrit un terminal associant au moins un tube vidéo et un coffret de clavier rabattable et partiellement emboîté dans une ouverture se trouvant en bas du boîtier d'écran. Le coffret de clavier peut être détaché mécaniquement du boîtier d'écran tout en restant électriquement relié à ce dernier.

Du document EP-A-0 013 318 il est connu d'utiliser un terminal d'entrée de données à configuration modifiable. Ce terminal permet d'une part le montage d'un coffret de clavier dans un emboîtage d'un châssis central, et d'autre part le détachement mécanique du coffret de clavier, la liaison électrique étant assurée par un câble supplémentaire. Dans cette dernière configuration, une cache ferme l'ouverture de l'emboîtage du châssis central.

L'invention a pour but de concevoir un agencement de raccordement de clavier sur un terminal informatique permettant de substituer sur demande tout type de clavier à un clavier rabattable initialement prévu et éventuellement d'installer un clavier rabattable en lieu et place d'un clavier indépendant, par simple assemblage sans modification de la carosserie du terminal. Ce but est atteint selon l'invention par l'agencement tel que défini dans la revendication 1. En ce qui concerne des exemples préférés de réalisation, référence est faite aux sous-revendications.

L'invention sera décrite ci-après plus en détail en liaison avec les figures répértoriées ci-dessous.

La figure 1 présente un terminal informatique doté d'un agencement de raccordement de clavier pour clavier rabattable.

La figure 2 présente un terminal informatique doté d'un agencement identique de raccordement de clavier, associé à un clavier indépendant.

La figure 3 présente schématiquement le mode de raccordement des claviers dans l'agencement selon l'invention.

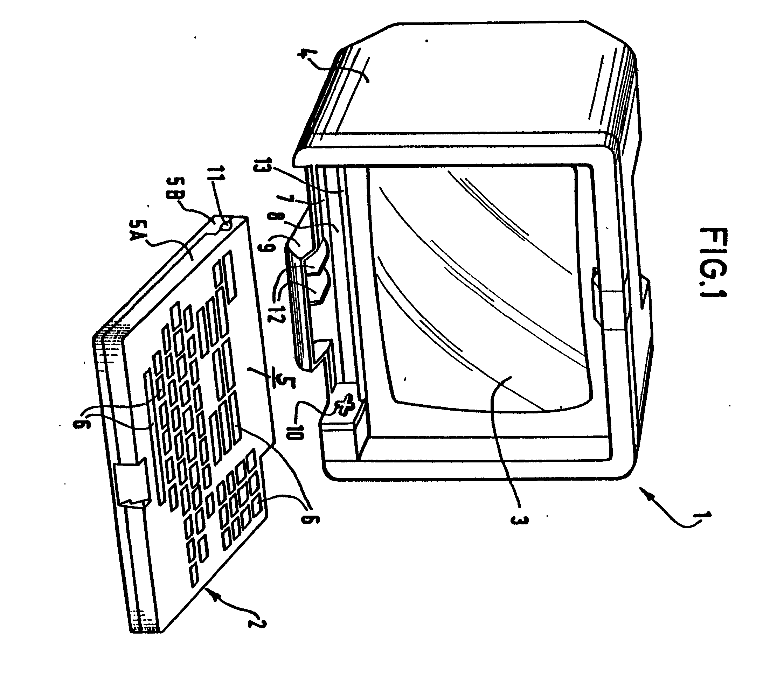

Le terminal informatique 1 présenté à la figure 1 est classique ment destiné à produire ou recevoir des informations transmissibles sous forme numérique en particulier des données alphanumériques, des signaux d'image, des codes ponctionnels ces informations soit transitent par une liaison de transmission, non figurée, reliant le terminal à un système informatique distant, soit sont produites par un clavier 2 affecté au terminal.

Dans une forme classique de réalisation la liaison de transmission est une ligne téléphonique permettant de relier le terminal informatique à des systèmes informatiques serveurs distants par l'intermédiaire du réseau téléphonique dont fait partie la ligne et le terminal informatique comporte un équipement, non figuré, pour pouvoir se connecter à la ligne comme ou en parallèle à un poste téléphonique classique.

Le terminal informatique 1 comporte un dispositif de visualisation à écran 3, classiquement organisé autour d'un tube écran, ou éventuellement d'un écran électronique plat, dont la partie servant à l'affichage occupe l'essentiel de la face avant d'un boîtier 4, dit d'écran, qui enferme le reste du dispositif de visualisation et de son interface de commande, non figurée, la reliant à la ligne téléphonique et au clavier 2.

De manière connue cette interface de commande est organisée autour d'une logique à microprocesseur non figurée et elle comporte les différents éléments habituellement associés à ce microprocesseur pour son fonctionnement, ainsi qu'un équipement de raccordement téléphonique doté d'un modem pour les échanges via la ligne téléphonique et une interface clavier pour le raccordement de ce dernier.

Ces différents éléments composants sont reliés par un bus commun non figuré et dans la réalisation proposée ce bus dessert les circuits du clavier 2 logés dans le coffret 5, dit de clavier, qui les contient et porte les touches 6. En ce but un câble multiconducteur non figuré relie le clavier 2 à une carte de circuit 7 contenue dans le boîtier d'écran 4.

Dans l'exemple de réalisation présenté le coffret de clavier 5 est partiellement emboîté au bas du boîtier d'écran 4 sous l'écran 3 de manière à permettre une rotation du coffret de clavier 5 au niveau de son emboîtage. Ceci permet de positionner le clavier 2, soit en position d'exploitation des touches 6 le couvercle 5A du coffret de clavier 5 qui porte les touches faisant un angle plus ou moins obtus avec l'écran, soit en position rabattue vers le haut devant l'écran 3, les touches 6 faisant face à cet écran 3 étant alors inaccessibles, le coffret de clavier 5 faisant corps avec le boîtier d'écran 4, de manière à former un bloc fermé protégeant l'écran et les touches contre les chocs.

En ce but le boîtier d'écran 4 comporte une ouverture 8 au niveau d'emboîtage du coffret de clavier 5, cette ouverture 8 donne accès à l'intérieur de ce boîtier à partir du coffret de clavier pour un câble multiconducteur plat qui est par exemple du type film souple et qui n'est pas représenté à la figure 1.

Ce câble multiconducteur plat est fixé d'une part à une carte de circuit non figurée située dans le coffret de clavier 5 parallèlement au couvercle 5A traversé par les touches 6, et d'autre part à une carte de circuit 7 du boîtier d'écran 4 qui dans l'exemple choisi est placée sous l'écran au niveau de l'ouverture 8 et en retrait par rapport à elle.

Dans une variante de réalisation, ce câble multiconducteur est prévu pour les liaisons du bus du microprocesseur du terminal informatique 1, pour les fils de ligne téléphonique et pour une alimentation en énergie sous forme continue pour des circuits du clavier 2.

Le câble multiconducteur, reliant le coffret de clavier 5 au boîtier d'écran 4, est caché et inaccessible de l'extérieur de la carrosserie formée par ce coffret et ce boîtier quel que soit le rabattement du clavier, ceci étant obtenu par exemple par le fait que la partie inférieure du boîtier d'écran 4 comporte un prolongement en auge 9 s'étendant sur tout ou partie de l'ouverture 8 qu'elle limite inférieurement.

L'auge 9 contient deux plaquettes de positionnement 12 pour le guidage vertical du câble multiconducteur disposé horizontal, parallèlement au bord supérieur 13 de l'ouverture 8.

Cette auge 9 est conçue de manière à coopérer avec une partie complémentaire en saillie non figurée de la partie constituant le fond 5B du coffret de clavier qui vient s'y loger lors de la rotation de ce clavier dans l'emboîtage pour le rabattement.

Dans l'exemple de réalisation présenté, la rotation s'effectue autour de deux tétons d'articulation 10, dont un seul est représenté, ces tétons étant situés au même niveau sous l'écran 3 de part et d'autre de l'ouverture 8 sur deux parois perpendiculaires à la face visible d'écran.

Le coffret de clavier 5 est composé du couvercle 5A et du fond 5B encliquetables l'un contre l'autre de manière à enfermer les circuits du clavier en laissant saillir les touches 6. Il comporte une ouverture, non figurée, de forme rectangulaire qui vient correspondre avec l'ouverture du boîtier d'écran au-dessus de l'auge 9 de manière à laisser un passage pour le câble multiconducteur quel que soit le rabattement du clavier. Il comporte également deux ouvertures d'accrochage 11, dont une seule est représentée en figure 1, ces ouvertures sont alignées de part et d'autre du coffret de clavier au niveau de son emboîtement dans le boîtier d'écran, elles viennent enserrer chacune un téton 10 de manière à permettre le pivotement du clavier. Dans l'exemple présenté, c'est l'encliquetage du couvercle 5A sur le fond 5B après positionnement de ce fond et de ce couvercle autour des tétons 10 qui assure la fixation du coffret de clavier au boîtier d'écran.

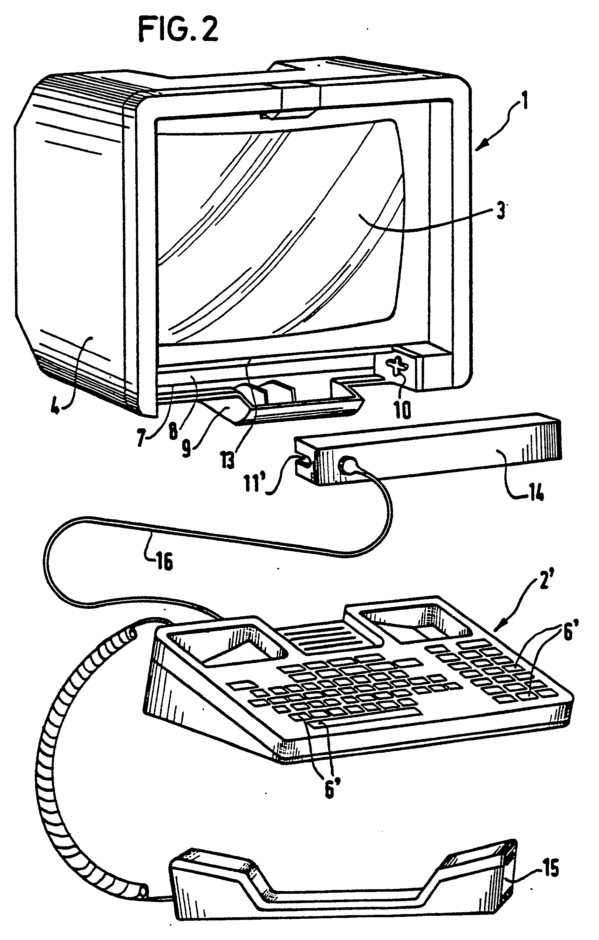

Le terminal informatique 1 présenté en figure 2 se présente de manière identique à celui présenté en figure 1, il est par contre associé à un clavier indépendant 2', relié à un embout 14 destiné à venir se substituer au clavier 2 rabattable normalement prévu avec un tel terminal.

Dans l'exemple de réalisation présenté le clavier 2' est aussi associé à un combiné téléphonique 15 pour communication téléphonique vocale, le terminal informatique 1 est donc aussi utilisable comme un téléphone classique.

D'une manière plus générale, le clavier 2' peut être de tout type en fonction des besoins, il est relié à l'embout 14 soit par une liaison filaire telle que 16, soit éventuellement par une liaison sans fil permettant l'échange des informations entre clavier 2' et terminal 1, via l'embout 14 doté en ce but d'un circuit d'interface approprié non représenté ici.

Dans une forme de réalisation particulière le clavier 2' est relié par une liaison série au circuit d'interface de l'embout 14 pour la transmission des données produites à l'aide des touches 6' et c'est ce circuit qui assure l'adaptation aux caractéristiques prévues pour le transfert au moyen du bus du microprocesseur du terminal informatique 1. Comme indiqué plus haut une alimentation en énergie et une liaison téléphonique sont également susceptibles d'être établies jusqu au clavier 2' à partir du terminal informatique 1 via le circuit d'interface de l'embout 14.

Pratiquement l'embout 14, qui est de même matériau que le boîtier d'écran 4, vient s'adapter exactement au bas de l'écran contre le bord supérieur 13 de l'ouverture 8 et sur l'auge 9 de manière à obturer l'ouverture et à compléter visuellement le bas du boîtier d'écran 4 sous l'écran.

En ce but l'embout 14 comporte deux ouvertures d'accrochage 11', dont une seule est visible sur la figure 2, afin de venir s'encliqueter sur les tétons 10.

Dans la réalisation les ouvertures 11' situées aux extrémités latérales de l'embout sont en forme de U de manière à s'enficher latéralement sur les tétons et la fixation s'effectue par des pattes d'encliquetage classique non figurées venant s'accrocher au boîtier d'écran 4 dans l'ouverture 8.

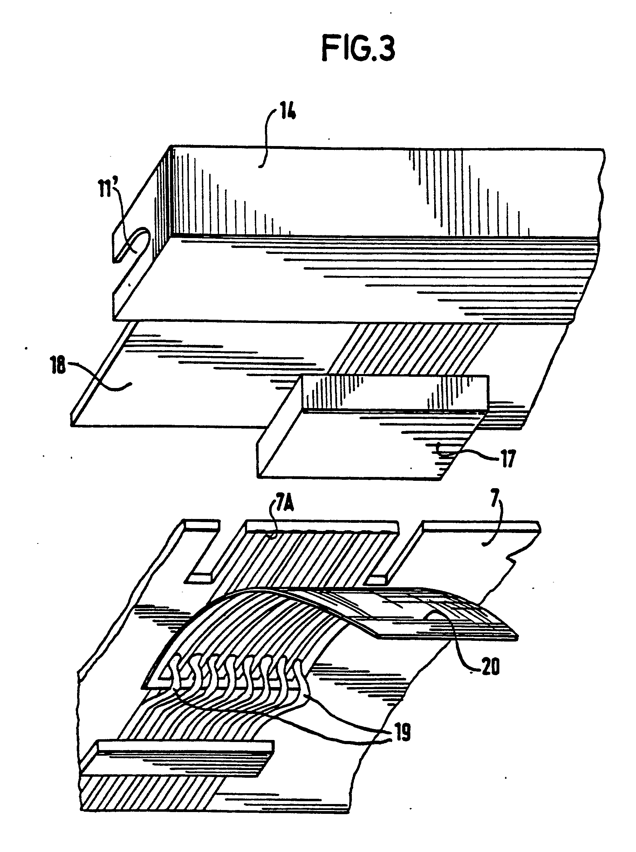

Dans une forme de réalisation présentée figure 3, la carte de circuit T du boîtier d' écran U comporte d'origine une extrémité de connexion multiconductrice mâle 7A pour un connecteur femelle classique 17 prévu sur la carte de circuit d'interface 18 de l'embout 14, ainsi qu'un connecteur femelle à lames de ressort 19, en arrière de cette extrémité mâle 7A, pour le film souple 20 constituant le câble multiconducteur pour le clavier rabattable 2.

L'ensemble peut être prévu à l'origine dans le terminal informatique en ce qui concerne le film conducteur 20 et les éléments de la carte de circuit 7 logés dans le boîtier d'écran.

Il est par contre possible d'adapter n'importe quel clavier indépendant 2' par simple changement d'une cartouche constituée par la carte de circuit d'interface 18, de son connecteur femelle 17 et des composants spécifiquement répartis sur cette carte 18 pour assurer l'interface entre clavier 2' choisi et terminal informatique 1.

## Revendications

1. Agencement de raccordement de clavier pour terminal informatique (1) destiné à produire ou recevoir des informations, transmissibles sous forme numérique et affichables sur écran (3), à partir de signaux codés transitant via une liaison de transmission ou produits à partir d'un clavier (2) affecté à ce terminal, la carrosserie de ce terminal comportant un boîtier (4) où est logé un dispositif de visualisation à écran (3), qui est relié par un film souple multiconducteur (20) à un coffret (5) de clavier rabattable et détachable, le coffret (5) pouvant passer d'une position d'exploitation donnant accès au clavier à une position rabattue par pivotement vers le haut, devant l'écran, pour protéger l'écran et le clavier lorsque le terminal n'est pas exploité, le film multiconducteur étant caché et inaccessible de l'extérieur de la carrosserie quel que soit la position de rabattement du coffret de clavier par rapport à l'écran, caractérisé en ce que le boîtier d'écran comporte, sous l'écran, un emboîtage dont l'ouverture (8) permet d'une part le montage dudit coffret (5) de clavier et d'autre part le montage d'un embout (14) de sorte que, le coffret de clavier (5) étant détaché du boîtier (4), l'embout (14) se fixe de façon immobile sur l'emboîtage, ferme l'ouverture (8) prévue pour le coffret (5) de clavier et contient au moins partiellement une carte de circuit (18) connectée à la carte (7) contenue dans le coffret d'écran, cet embout desservant un clavier indépendant (2'), avec lequel il échange des signaux codés par une liaison spécifique (16).

2. Agencement de raccordement de clavier selon la revendication 1, caractérisé en ce que le coffret de clavier (5) et l'embout (14) qui s'y substitue, comportent identiquement deux ouvertures d'accrochage (11; 11') à deux tétons (10) d'articulation orientés face à face et alignés sous l'écran (3) de part et d'autre de cet écran dans l'emboîtage prévu pour le coffret de clavier et l'embout, l'embout (14) venant s'enficher par ses extrémités sur les tétons (10), le coffret de clavier (5) venant les enserrer lors de son encliquetage.

3. Agencement de raccordement de clavier selon la revendication 1, caractérisé en ce que la carte (7) de circuit de raccordement de film (20) situé dans le boîtier d'écran (4) est horizontalement disposé au bas de ce dernier, parallèlement à l'ouverture (8) d'emboîtage et comporte d'une part un agencement de connexion multiconducteur mâle (7A) orienté vers l'ouverture à son extrémité la plus proche de cette ouverture, d'autre part un agencement de connexion femelle (19) pour film multiconducteur (20) en arrière de l'agencement mâle, de manière à permettre par simple déconnexion/connexion la substitution d'un embout à un clavier rabattable et réciproquement.

## Patentansprüche

1. Tastaturanschlußanordnung für eine Datenendstation (1) zur Erzeugung oder zum Empfang von Informationen, die in digitaler Form übertragbar und auf einem Bildschirm (3) anzeigbar sind, und die aus kodierten Signalen stammen, welche über eine Übertragungsleitung laufen oder auf einer zur Datenendstation gehörenden Tastatur (2) erzeugt werden, wobei die Verkleidung dieser Datenendstation ein Gehäuse (4) umfaßt, in welchem eine Anzeigevorrichtung mit Bildschirm (3) untergebracht ist, die durch ein nachgiebiges, vieladriges Flachkabel (20) mit einen umklappbaren und abnehmbaren Tastaturgehäuse (5) verbunden ist, wobei das Tastaturgehäuse (5) aus einer Arbeitsposition mit Zugang zur Tastatur in eine durch Aufwärtsschwenken gegen den Bildschirm umgeklappte Position übergehen kann, um den Bildschirm und die Tastatur zu schützen, wenn die Datenendstation nicht in Betrieb ist, wobei das vieladrige Flachkabel verdeckt und von außerhalb der Verkleidung unzugänglich ist, gleichgültig, in welcher Position das Tastaturgehäuse in Bezug auf den Bildschirm steht, dadurch gekennzeichnet, daß das Bildschirmgehäuse unter dem Bildschirm ein Einschubfach besitzt, dessen Öffnung (8) einerseits die Anbringung des Tastaturgehäuses (5) und andererseits die Anbringung einer Kappe (14) gestattet, derart, daß sich bei vom Gehäuse (4) abgenommenen Tastaturgehäuse (5) die Kappe (14) unverrückbar über das Einschubfach setzt, dabei die für das Tastaturgehäuse (5) vorgesehene Öffnung (8) verschließt und mindestens teilweise eine Leiterplatte (18) enthält, die mit der im Bildschirmgehäuse enthaltenen Druckschaltungsplatte (7) verbunden ist, wobei die Kappe eine unabhängige Tastatur (2') bedient, mit der sie kodierte Signale über eine spezielle Leitung (16) austauscht.

2. Tastaturanschlußanordnung nach Anspruch 1, dadurch gekennzeichnet, daß das Tastaturgehäuse (5) und die an seine Stelle tretende Kappe (14) identisch zwei Einhängeöffnungen (11; 11') mit zwei unter dem Bildschirm (3) ausgerichtet einander gegenüberliegenden Gelenkzapfen (10) zu beiden Seiten des Bildschirms im Einschubfach für das Tastaturgehäuse und die Kappe aufweisen, wobei sich die Kappe (14) mit ihren Enden auf die Zapfen (10) steckt und das Tastaturgehäuse (5) sie bei seiner Verklinkung einspannt.

3. Tastaturanschlußanordnung nach Anspruch 1, dadurch gekennzeichnet, daß die im Bildschirmgehäuse (4) befindliche Druckschaltungsplatte (7) zum Anschluß des Flachkabels (20) waagerecht im unteren Teil des Gehäuses angeordnet ist, parallel zur Öffnung (8) des Einschubfaches, und daß sie einerseits eine mehradrige Steckeranordnung (7A) aufweist, welche an ihrem der Öffnung am nächsten gelegenen Ende zur Öffnung hin orientiert ist, und andererseits eine Buchsenanordnung (10) für das mehradrige Flachkabel (20) an der rückwärtigen Seite der Steckeranordnung besitzt, derart, daß durch einfaches Lösen und Verbinden das Auswechseln einer umklappbaren Tastatur gegen eine Kappe und umgekehrt möglich ist.

**Claims**

1. A keyboard connection arrangement for a computer terminal (1) for producing or receiving information which is transmissible in digital form and displayable on a screen (3), on the basis of coded signals transmitted via a transmission link or produced from a keyboard (2) associated with the terminal, the bodywork of the terminal including a housing (4) in which a screen display device (3) is housed, which terminal is connected via a flexible multiconductor film (20) to a hinged and detachable keyboard box (5), the box (5) being capable of moving between an in-use position giving access to the keyboard and a closed position by pivoting upwardly in front of the screen to protect both the screen and the keyboard when the terminal is not in use, the multiconductor film being hidden and inaccessible from outside the bodywork regardless of the hinged position of the keyboard box relative to the screen, the arrangement being characterized in that the screen housing includes, beneath the screen, a recess whose opening (8) enables firstly said keyboard box (5) to be assembled thereto and secondly an end piece (14) to be assembled thereto such that, with the keyboard box (5) detached from the housing (4), the end piece (14) can be fixed in non-movable manner in the recess to close the opening (8) provided for the keyboard box (5), the end piece containing at least a portion of a circuit card (18) connected to the card (7) contained in the screen housing, said end piece serving an independent keyboard (2') with which it interchanges encoded signals via a special link (16).

2. A keyboard connection arrangement according to claim 1, characterized in that the keyboard box (5) and the end piece (14) which replaces it are identically provided with two fastening openings (11; 11') for fastening to hinged studs (10) facing each other and in alignment beneath the screen (3) on either side of said screen and within the recess provided for the keyboard box and for the end piece, the end piece (14) having its ends plugged onto the studs (10), and the keyboard box (5) being clamped thereabout when it is snapped together.

3. A keyboard connection arrangement according to claim 1, characterized in that the circuit card (7) for connection to the film (20) situated inside the screen housing (4) is disposed horizontally in the bottom thereof, parallel to the opening (8) of the recess and includes firstly a male multiconductor connection arrangement (7A) facing towards the opening at its end closest to said opening, and secondly a female connection arrangement (19) for the multiconductor film (20) located behind the male arrangement, in such a manner as to enable a hinged keyboard to be replaced by an end piece, and vice versa, merely by connection and disconnection.

# FIG.1

# FIG.2

# FIG.3